Europäisches Patentamt

European Patent Office

Office européen des brevets

(11) Publication number: **0 250 040**
**B1**

## EUROPEAN PATENT SPECIFICATION

(45) Date of publication of patent specification: **03.10.90**

(51) Int. Cl.⁵: **F 16 J 15/26, F 16 J 15/32**

(21) Application number: **87201113.5**

(22) Date of filing: **12.06.87**

(54) Pressure tight sealing arrangement for rotary shafts.

(30) Priority: **16.06.86 IT 2227586 u**

(43) Date of publication of application:
**23.12.87 Bulletin 87/52**

(45) Publication of the grant of the patent:
**03.10.90 Bulletin 90/40**

(84) Designated Contracting States:
**AT BE DE ES FR GB IT NL SE**

(56) References cited:
**FR-A- 918 468**
**FR-A-2 206 830**
**GB-A-2 024 365**
**US-A-2 368 380**
**US-A-4 212 477**

(73) Proprietor: **RIVA CALZONI S.p.A.**
**Via Stendhal, 34**
**I-20144 Milano (IT)**

(72) Inventor: **Ucelli, Guido Riva Calzoni S.p.A**
**Via Stendhal 34**
**I-20144 Bologna (IT)**

(74) Representative: **Raimondi, Alfredo, Dott. Ing. Prof. et al**
**Studio Tecnico Consulenza Brevetti Piazzale Cadorna 15**
**I-20123 Milano (IT)**

Courier Press, Leamington Spa, England.

EP 0 250 040 B1

## Description

In many applications, the necessity arises of creating a seal for a pressurized fluid between a fixed seating and a shaft rotating in the seating. Such applications may consist, for example, of shafts of pumps and hydraulic motors of variable swept volume, and of oleodynamic applications, such as multi-way rotating couplings, in order to operate a control on some device set in rotation, by means of transfer of pressurized fluid.

The seal in such cases may be constructed, according to the known state of the art, with various devices such as rubber gaskets or seals or the like, possibly in conjunction with an antifriction skid, or with metal salts having front sliding, but such constructions frequently have an inadequate sealing action, especially in the case of high circumferential velocity of the rotating shaft and high fluid pressures, or they may require considerable dimensions, especially in the axial direction.

From US—A—2 368 380 a seal for rotatable shafts is known, having an annular core of compressible material enveloped by an outer casing of resilient material, with sealing members around the inner wall of the seal for engaging a shaft.

This seal is designed so that the outer casing enables the same seal to be lodged in an outwardly open cave and prevents the contact of the fluid to be sealed with the compressible core.

This structure, however, is rather bulky and requires a large seat, both in radial and axial direction, and the seal action is performed only by the elastic properties of the compressible material, which can be not enough to grant the sealing and the durability of the seal assembly for some applications.

The problem therefore arises of realizing a seal unit for rotating shafts which shall ofer optimum sealing for the fluid, even in especially difficult operating conditions, possessing moreover reduced bulk or dimensions, so as not adversely to affect the dimensions of the member on which it is intended that the seal shall be fitted, such as for example housing within a closed slot.

These results are achieved by the present invention, which provides a seal unit for pressurized fluid for rotating shafts or casings, comprising an elastic ring inserted in a groove formed in a fixed body, relative to which the shaft or the casing rotates and relative to which sealing is provided, radially inside which ring there are situated split elements bearing against the surface of the rotating shaft and sliding on it, in which the elastic ring has a substantially circular cross-section and that between the ring and the two split elements there is situated an annular slide shoe capable of bearing the high pressure in the radial direction and that the elastic ring is inserted between the bottom of the groove and the annular slide shoe with elastic deformation, thus causing a gripping in the radial direction on the split elements and a compression loading in the ring itself, adapted for ensuring static sealing between the ring and the groove and between the ring and the annular slide shoe, and between the latter and the split elements, the arrangement being such that the split element adjacent the high pressure is urged by virtue of the pressurized fluid with a greater radial force against the shaft or casing than the other split element.

The annular slide shoe and the split segments are made of a plastic material having a low coefficient of friction, compatible with the operating conditions envisaged; the split segments may also be made of a metallic material of low coefficient of friction in relation to the particular operating conditions.

Further details may be obtained from the following description, with reference to the attached drawings, in which there are shown:

in Figure 1, a sectional view of a shaft equipped with the rotating seal unit according to this invention;

in Figure 2, a detail of the seal unit showing the distribution of the internal forces.

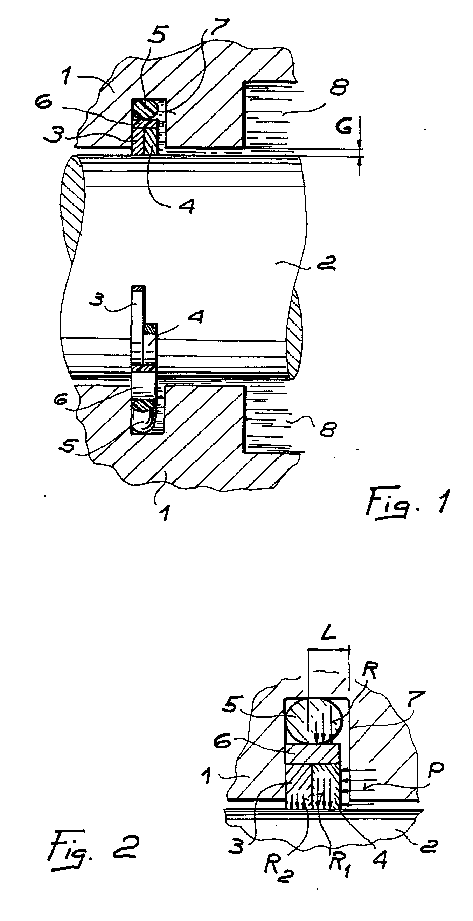

As shown in Figure 1, the seal unit according to this invention, intended for providing a seal against the pressurized fluid between a fixed body 1 and a shaft 2 rotatable in it, is constituted of a pair of split segments 3, 4, in contact with the shaft 2, around which segments there is disposed an elastic toroidal ring 5, with the interposition of an annular slide shoe 6, the whole assembly being housed in a seating 7 of the fixed body 1.

The fluid to be intercepted is situated in a chamber, hollow space or the like 8 and, through the space due to the play G existing between the body 1 and the shaft 2, reaches the seating 7, and acts upon the toroidal ring 5 and upon the segment 4 and the slide shoe 6; furthermore, the pressurized fluid acts upon the contact zones between the various elements and in particular in the contact zone between the split segments 3, 4 and the shaft 2.

As Figure 2 shows, the pressure P of the fluid, which acts upon the sealing elements and causes a permeation of the fluid itself between the rotating shaft and the fixed sealing members, causes a displacement of the members themselves towards one side of the seating 7, this pressure becoming distributed on the sealing elements both in the axial direction and in the radial direction; in particular, this pressure bears upon the slide shoe 6 in the radial direction, as indicated by the arrows R, for an area of length L limited by the action of the toroidal ring 5, which exerts a sealing action of the static type between the seating 7 and the shoe 6.

The presence of a zone of greater radial load R on the slide shoe 6 results, as a consequence of the deformability of the slide shoe itself, in a radial load R1 on the segment 4 which is substantially larger than the radial load R2 on the segment 3.

The fluid which, as a consequence of the pressure P, penetrates into the small passages existing between the segment 4 and the shaft 2, provides lubrication to the contact surfaces, thus avoiding over-heating which could damage the segments; the fluid which penetrates from the segment 4 then provides a more limited lubrication to the segment 3, which is, however, subjected to a smaller radial load R2 and therefore is capable of operating in such conditions without being damaged, thereby ensuring complete sealing.

The seal between the toroidal ring 5, the seating 7 and the slide shoe 6, and between the slide shoe 6 and the segments 3, 4, is of the static type and therefore does not present any special problems; furthermore, the presence of the toroidal ring 5, of elastomer material, enables any eccentric fluctuations of the segments to be compensated, and offers a good seal even in the case where the segments are entrained in rotation.

The segments 3, 4 and the slide shoe 6 are advantageously made of polymer materials having a low coefficient of friction, for example PTFE (polytetrafluoroethylene) or the like, resistant to the operating conditions envisaged; in partcular cases, segments of metal may also advantageously be used, according to the operating characteristics of the shaft on which they are mounted, such as high or low rotational speed, the material of the shaft, the nature and temperature of the fluid and the like.

The seal unit according to this invention is of symmetrical type, and sealing against fluid pressurized in either direction can therefore be created; it proves to be suitable for operating without wear in the presence of high circumferential velocities of the shaft 2 and of high continuous pressures of the fluid. The structure of the seal unit enables the pairing between the rotating shaft 2 and the fixed body 1 to be arranged with a play G of considerable size, thus avoiding in all cases direct contact between the two elements; furthermore, the pre-compression of the toroidal ring between the slide shoe 6 and the sealing 7 exerts a load in the radial direction between the shaft 2 and the segments 3, 4 and therefore makes operation possible even in the case where there is slight eccentricity of the rotating shaft.

## Claims

1. Seal unit for pressurized fluid for rotating shafts or casings, comprising an elastic ring (5) inserted in a groove (7) formed in a fixed body (1), relative to which the shaft (2) or the casing rotates and relative to which sealing is provided, radially inside which ring there are situated split elements (3, 4) bearing against the surface of the rotating shaft and sliding on it, characterized in that the elastic ring (5) has a substantially circular cross-section and that between the ring and the two split elements there is situated an annular slide shoe (6) capable of bearing the high pressure in the radial direction and that the elastic ring (5) is inserted between the bottom of the groove (7) and the annular slide shoe (6) with elastic deformation, thus causing a gripping in the radial direction on the split elements (3, 4) and a compression loading in the ring itself, adapted for ensuring static sealing between the ring (5) and the groove (7) and between the ring (5) and the annular slide shoe (6), and between the latter and the split elements (3, 4), the arrangement being such that the split element (4) adjacent the high pressure is urged by virtue of the pressurized fluid with a greater radial force against the shaft (2) or casing than the other split element (3).

2. Seal unit for pressurized fluid for rotating shafts according to Claim 1, characterized by the fact that the annular slide shoe (6) and the split segments (3, 4) are formed of a plastics material having a low coefficient of friction, compatible with the operating conditions envisaged.

3. Seal unit for pressurized fluid for rotating shafts according to Claim 1, characterized by the fact that the annular slide shoe (6) is formed of a plastics material, compatible with the operating conditions envisaged, and the split segments (3, 4) are formed of a metallic material having a low coefficient of friction.

## Patentansprüche

1. Abdichteinheit für ein unter Druck stehendes Fluid für sich drehende Wellen oder Gehäuse, mit einem elastischen Ring (5), der in eine Nut (7) eingesetzt ist, die in einen feststehenden Körper (1) eingeformt ist, relativ zu welchem sich die Welle oder das Gehäuse dreht und relativ zu welchem eine Abdichtung erfolgt, wobei radial innerhalb des Ringes geteilte Elemente (3, 4) angeordnet sind, die sich an der Oberfläche der sich drehenden Welle abstützen und auf ihr gleiten, dadurch gekennzeichnet, daß der elastische Ring (5) im wesentlichen einen kreisförmigen Querschnitt besitzt und daß zwischen dem Ring und den beiden geteilten Elementen ein ringförmiger Gleitschuh (6) angeordnet ist, der in der Lage ist, den hohen Druck in radialer Richtung aufzunehmen, und daß der elastische Ring (5) zwischen dem Boden der Nut (7) und dem ringförmigem Gleitschuh (6) unter elastischer Verformung eingesetzt ist, was ein Einspannen der geteilten Elemente (3, 4) in radialer Richtung und eine Kompression des Ringes selbst zur Folge hat und eine statische Abdichtung zwischen dem Ring (5) und der Nut (7), sowie zwischen dem Ring (5) und dem ringförmigen Gleitschuh (6), zwischen dem letzteren und den geteilten Elementen (3, 4) sicherstellt, und daß die Anordnung derart erfolgt, daß das geteilte Element (4), das auf der Hochdruckseite liegt, unter Wirkung des unter Druck stehenden Fluids mit größerer radialer Kraft gegen die Welle (2) oder das Gehäuse gedrückt wird, als das andere geteilte Element (3).

2. Abdichteinheit für ein unter Druck stehendes Fluid für sich drehende Wellen gemäß Anspruch 1, gekennzeichnet dadurch, daß der ringförmige Gleitschuh (6) und die geteilten Segmente (3, 4) aus Kunststoffmaterial geformt sind, und einen niedrigen Reibungskoeffizienten besitzen, der mit den erwarteten Betriebsbedingungen kompatibel ist.

3. Abdichteinheit für ein unter Druck stehendes Fluid für sich drehende Wellen gemäß Anspruch 1, dadurch gekennzeichnet, daß der ringförmige Gleitschuh (6) aus Kunststoffmaterial mit einem niedrigen Reibungskoeffizienten geformt ist, der mit den erwarteten Betriebsbedingungen kompatibel ist, und daß die geteilten Segmente (3, 4) aus metallischem Material geformt sind.

**Revendications**

1. Ensemble d'étanchéité pour fluide sous pression pour arbre rotatif du boitier, comprenant une bague élastique (5) insérée dans une gorge (7) formée dans un corps fixe (1), par rapport auquel l'arbre (2) ou le boitier tourne et par rapport auquel l'étanchéité est assurée, des éléments fendus (3, 4) situés radialement à l'intérieur de la bague, prenant appui contre la surface de l'arbre rotatif et glissant sur celle-ci, caractérisé en ce que la bague élastique (5) a une section transversale à peu près circulaire et en ce qu'une smelle annulaire de glissement (6) est disposée entre la bague et les deux éléments à fente, cette semelle annulaire étant apte à supporter la pression élevée dans le sens radial et en ce que la bague élastique (5) est insérée avec déformation élastique entre le fond de la gorge (7) et la semelle de glissement annulaire (6), assurant ainsi un serrage dans le sens radial sur les éléments à fente (3, 4) et une charge de compression dans la bague elle-même, cette déformation étant apte à assurer une étanchéité statique entre la bague (5) et la gorge (7) et entre la bague (5) et la semelle annulaire de glissement (6), et entre cette dernière et les éléments à fente (3, 4), l'agencement étant tel que l'élément à fente (4) adjacent à la pression élevée est forcé contre l'arbre (2), ou le boitier, par l'action du fluide sous pression avec une force radiale plus grande que l'autre élément à fente (3).

2. Ensemble d'étanchéité pour fluide sous pression pour arbre rotatif suivant la revendication 1, caractérisé en ce que la semelle de glissement annulaire (6) et les segments à fente (3, 4) sont formés d'une matière plastique ayant un faible coefficient de frottement, compatible avec les conditions de fonctionnement envisagées.

3. Ensemble d'étanchéité pour fluide sous pression pour arbre rotatif suivant la revendication 1, caractérisé en ce que la semelle de glissement annulaire (6) est formée d'une matière plastique ayant un faible coefficent de frottement, compatible avec les conditions de fonctionnement envisagées, et les segments à fente (3, 4) sont formés d'une matière métallique.

Fig. 1

Fig. 2